(19) Europäisches Patentamt
European Patent Office
Office européen des brevets

(11) **EP 3 109 598 B1**

(12) **FASCICULE DE BREVET EUROPEEN**

(45) Date de publication et mention de la délivrance du brevet:
**28.02.2018 Bulletin 2018/09**

(51) Int Cl.:
*G01C 23/00* (2006.01)    *B64D 45/08* (2006.01)
*G05D 1/06* (2006.01)    *B64C 33/02* (2006.01)
*G09G 3/00* (2006.01)    *G08G 5/00* (2006.01)
*G08G 5/02* (2006.01)    *G02B 27/01* (2006.01)

(21) Numéro de dépôt: **16176197.8**

(22) Date de dépôt: **24.06.2016**

(54) **SYSTÈME D'AFFICHAGE D'UN AÉRONEF PRÉSENTANT UNE LIGNE D'HORIZON PROPRE À ÊTRE DÉFORMÉE ET PROCÉDÉ ASSOCIÉ**

ANZEIGESYSTEM EINES FLUGZEUGS, FAHIG EINE VERFORMBARE HORIZONTLINIE ANZUZEIGEN, UND ZUGEHORIGES VERFAHREN

DISPLAY SYSTEM OF AN AIRCRAFT, ABLE TO DISPLAY A HORIZON LINE ABLE TO BE DEFORMED AND RELATED METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.06.2015 FR 1501310**

(43) Date de publication de la demande:
**28.12.2016 Bulletin 2016/52**

(73) Titulaire: **Dassault Aviation**
**75008 Paris (FR)**

(72) Inventeurs:
• **LEPAGE, Sébastien**
**92400 COURBEVOIE (FR)**
• **BAUDSON, Olivier**
**92150 SURESNES (FR)**
• **TURPIN, Arnaud**
**92100 BOULOGNE BILLANCOURT (FR)**

(74) Mandataire: **Lavoix**
**2, place d'Estienne d'Orves**
**75441 Paris Cedex 09 (FR)**

(56) Documents cités:
**US-A1- 2009 138 142    US-A1- 2013 103 233**
**US-A1- 2015 123 821**

• **James Albright: "Heads Up Display - Symbology", , 1 décembre 2013 (2013-12-01), XP055251328, Extrait de l'Internet: URL:http://code7700.com/g450_hud_symbology .html [extrait le 2016-02-18]**

EP 3 109 598 B1

**Description**

La présente invention concerne un système d'affichage d'un aéronef selon le préambule de la revendication 1.

L'article de James Albright « Heads Up Display Symbology » du 1er décembre 2013 décrit un système du type précité.

Un tel système est destiné à être implanté dans le cockpit d'un aéronef pour être associé à un afficheur du cockpit. L'afficheur est par exemple un afficheur au moins partiellement transparent, tel qu'un écran semi transparent placé devant un pare-brise du cockpit, un système de projection d'images sur le pare-brise du cockpit, un pare-soleil semi-transparent, un viseur de casque, ou encore une lunette semi-transparente proche de l'oeil.

En variante, l'afficheur constitue un écran tête basse intégré dans le tableau de bord du cockpit.

Le système d'affichage est destiné à faciliter le pilotage lors de l'atterrissage d'un aéronef sur un terrain non horizontal.

Des systèmes connus affichent simultanément une ligne d'horizon, une échelle de pente et un symbole de vecteur vitesse qui permettent au pilote de visualiser facilement la pente de l'aéronef par la position relative du symbole de vecteur vitesse par rapport à la ligne d'horizon.

Lors de l'atterrissage d'un aéronef, le pilote utilise la ligne d'horizon affichée pour positionner la pente de l'aéronef par rapport à la piste. Il remonte progressivement le symbole de vecteur vitesse par rapport à la ligne d'horizon, lors de la phase d'arrondi, au-dessus de la piste, de façon à placer le symbole de vecteur vitesse sous la ligne d'horizon, à une distance déterminée de celle-ci correspondant à une pente cible, par exemple de l'ordre de 1° sous la ligne d'horizon, avant le toucher des roues. Une telle manoeuvre permet un toucher confortable de l'aéronef sur la piste.

Une telle manoeuvre fonctionne bien sur une piste d'atterrissage plate. Cependant, dans certains cas, la piste d'atterrissage présente une pente pouvant aller jusqu'à +10°.

Dans le cas où la pente de la piste est positive au niveau du seuil de piste, la remontée progressive du vecteur vitesse par le pilote peut être insuffisante pour compenser l'angle plus faible formé entre le vecteur vitesse de l'aéronef et l'axe de la piste. Dans ce cas, bien que le pilote maintienne une pente cible adéquate si la piste était plate, la pente de l'aéronef par rapport à la piste inclinée reste trop forte au moment du toucher, du fait de la remontée locale de la piste au point de toucher.

En conséquence, le toucher de l'aéronef peut être relativement dur, ce qui nuit au confort des passagers.

À l'inverse, lorsque la pente de la piste est négative, la manoeuvre d'arrondi réalisée par le pilote ne garantit plus une pente suffisante pour réaliser un toucher au point souhaité. L'aéronef se pose donc plus loin sur la piste, ce qui crée un risque de remise des gaz, voire de sortie de piste.

Un but de l'invention est donc d'obtenir un système d'affichage d'aéronef qui permette d'obtenir un toucher confortable pour les passagers, au point désiré, quelle que soit la configuration topographique de la piste d'atterrissage.

À cet effet, l'invention a pour objet un système selon la revendication 1.

Le système selon l'invention peut comprendre l'une ou plusieurs des caractéristiques des revendications 2 à 13 ou l'une des caractéristiques suivantes, prise(s) isolément ou suivant toute combinaison techniquement possible :

- l'ensemble de génération d'affichage sur l'afficheur est propre à afficher dynamiquement sur l'afficheur au moins une ligne d'horizon, une échelle de pente de l'aéronef par rapport à la ligne d'horizon et un symbole de vecteur vitesse, représentatif de la pente de l'aéronef par rapport à la ligne d'horizon, caractérisé et l'ensemble de génération d'affichage est propre à afficher, en approche d'une piste d'atterrissage, un symbole de guidage d'arrondi, la position du symbole de guidage d'arrondi sur l'afficheur dépendant de la pente topographique de la piste d'atterrissage approchée ;
- le symbole de guidage d'arrondi est propre à avertir l'équipage de l'atteinte d'une position de début de manoeuvre d'arrondi, de préférence d'une hauteur de début de manoeuvre d'arrondi,

la position de début de manoeuvre d'arrondi étant déterminée en tenant compte de la pente topographique de la piste d'atterrissage ;

- l'ensemble de génération d'affichage comporte une application de calcul de la position de début de manoeuvre d'arrondi, en fonction d'une pente topographique déterminée à partir d'au moins une information topographique issue d'une base de données caractéristique de la piste d'atterrissage ;
- l'ensemble de génération d'affichage est propre à signaler l'atteinte de la position de début de manoeuvre d'arrondi en plaçant le symbole de guidage d'arrondi en coïncidence avec le symbole de vecteur vitesse ;
- avant la position de début de manoeuvre d'arrondi, l'ensemble de génération d'affichage est propre à afficher le symbole de guidage d'arrondi sous le symbole de vecteur vitesse et à le rapprocher verticalement du symbole de vecteur vitesse jusqu'à la position de début d'arrondi ;
- l'ensemble de génération d'affichage est propre à rapprocher le symbole de guidage d'arrondi de la ligne d'horizon, suivant une loi de commande représentative d'un profil d'augmentation de la vitesse verticale durant l'arrondi, la loi de commande tenant compte de la pente topographique de la piste d'atterrissage ;

- la loi de commande est propre à permettre l'atteinte d'une vitesse verticale cible de fin d'arrondi, calculée en fonction de la pente topographique de la piste d'atterrissage ;
- l'ensemble de génération d'affichage comprend un module de récupération des données d'un capteur de mesure d'une hauteur de l'aéronef par rapport à la piste d'atterrissage, l'ensemble de génération d'affichage étant propre à déterminer la pente topographique de la piste d'atterrissage à partir des données du capteur de mesure de la hauteur de l'aéronef ;
- la pente réelle de l'aéronef correspond à une pente cible de l'aéronef suivant la loi de commande lorsque le symbole de guidage d'arrondi coïncide avec le symbole de vecteur vitesse ;
- il comprend un module de pilotage automatique, propre à actionner les commandes de l'aéronef pour asservir la position du symbole de vecteur vitesse à la position du symbole de guidage d'arrondi pour faire suivre à l'aéronef un profil d'augmentation de la vitesse verticale suivant la loi de commande.

L'invention a également pour objet un procédé d'affichage selon la revendication 14.

Le procédé selon l'invention peut comprendre la caractéristique de la revendication 15 où l'une des caractéristiques suivantes, prise(s) isolément ou suivant toute combinaison techniquement possible :

- il comprend l'étape suivante :

  - en approche d'une piste d'atterrissage donnée, affichage dynamique sur l'afficheur, par l'ensemble de génération d'affichage d'un symbole de guidage d'arrondi, la position du symbole de guidage d'arrondi dépendant de la pente de la piste d'atterrissage approchée ;
  - le symbole de guidage d'arrondi est propre à avertir l'équipage de l'atteinte d'une position de début de manoeuvre d'arrondi, de préférence d'une hauteur de début de manoeuvre d'arrondi,

la position de début de manoeuvre d'arrondi étant déterminée par l'ensemble de génération d'affichage en tenant compte de la pente topographique de la piste d'atterrissage.

L'invention sera mieux comprise à la lecture de la description qui va suivre, donnée uniquement à titre d'exemple, et faite en se référant aux dessins annexés, sur lesquels :

- la figure 1 est une vue schématique d'un premier système d'affichage d'un aéronef selon l'invention ;
- la figure 2 illustre schématiquement le cockpit d'un aéronef comprenant le premier système d'affichage ;
- les figures 3 à 7 illustrent l'affichage engendré par le système d'affichage lors de l'approche de l'aéronef vers une piste d'atterrissage ;
- la figure 8 est une vue schématique de côté, illustrant la pente apparente de l'aéronef par rapport à la piste, pour une piste ayant une pente positive ;
- la figure 9 est une vue analogue à la figure 8, pour une piste en pente négative ;
- la figure 10 est une vue schématique de côté, illustrant deux points successifs de la trajectoire de l'aéronef par rapport à une piste en pente positive ;
- la figure 11 est une vue analogue à la figure 4, lors d'une évolution en vent de travers ;
- la figure 12 est une vue analogue à la figure 4, illustrant l'affichage par une variante de système selon l'invention.

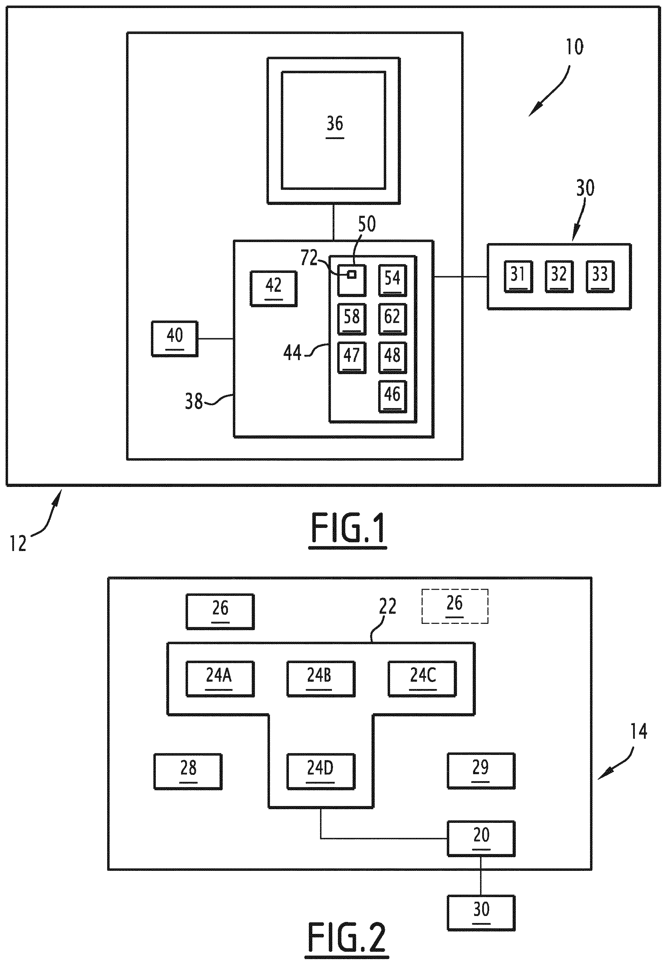

Un premier système 10 d'affichage d'un aéronef 12 selon l'invention est illustré schématiquement par les figures 1 et 2.

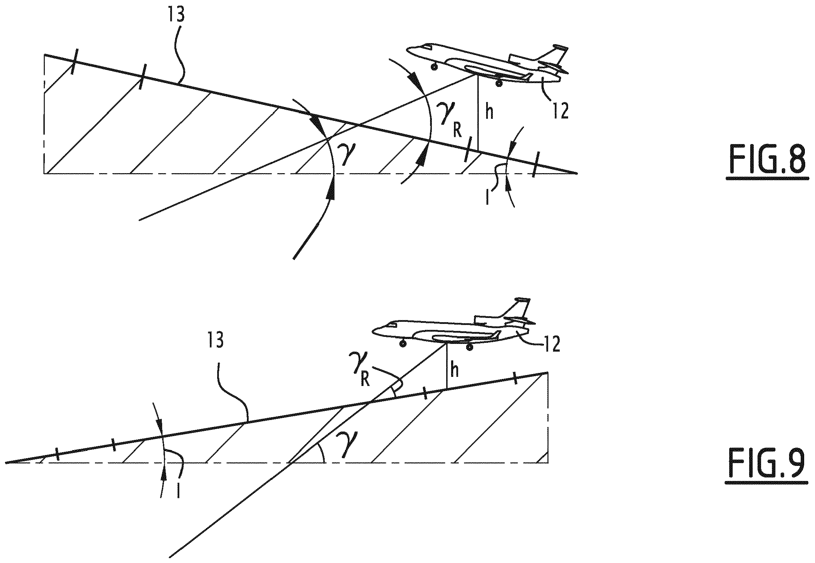

Ce système 10 est destiné à être installé dans un aéronef 12, visible schématiquement sur la figure 8, pour permettre l'affichage d'informations sur un afficheur présent dans le cockpit 14 de l'aéronef représenté schématiquement sur la figure 2.

Le système 10 est destiné à assister le pilote de l'aéronef lors d'une phase d'approche, au voisinage d'une piste 13, représentée schématiquement sur la figure 8.

En référence à la figure 2, le cockpit 14 est muni d'un système principal d'affichage 22 raccordé à une unité centrale d'avionique 20.

Le système principal 22 permet à l'équipage de piloter l'aéronef, de gérer sa navigation, de surveiller et commander les différents systèmes fonctionnels présents dans l'aéronef. Le système 22 comporte une planche de bord munie d'une pluralité d'écrans de base 24A à 24D formant des afficheurs tête basse.

Dans cet exemple le cockpit 14 est aussi avantageusement muni d'au moins un écran semi-transparent tête haute 26, placé en regard du pare-brise, voire de deux écrans semi-transparents tête haute 26.

Le cockpit 14 est par ailleurs muni d'un organe de commande 28 du pilotage de l'aéronef, tel qu'une manette ou un manche.

Il comporte avantageusement un système de pilotage automatique 29 propre à être activé par l'équipage.

De manière connue, les écrans de base 24A et 24C sont par exemple des écrans primaires d'affichage destinés à l'affichage de paramètres de vol de l'aéronef. Les écrans de base 24B et 24D sont par exemple des écrans multifonctionnels de navigation et/ou de suivi et de commande des systèmes d'avionique.

Le système d'affichage principal 22 est muni d'un ensemble de gestion d'affichage (non représenté) propre à afficher les différentes fenêtres présentes sur ces écrans 24A à 24D.

L'unité centrale d'avionique 20 est raccordée à un système 30 de capteurs de mesure de paramètres avions de l'aéronef 12.

Le système 30 de capteurs de mesure comporte par exemple des capteurs de mesure de paramètres extérieurs à l'aéronef tel que la température, la pression ou la vitesse, des capteurs de mesure de paramètres internes à l'aéronef et à ses différents systèmes fonctionnels, et des capteurs de positionnement, tel que des capteurs 31 de position géographique, notamment un capteur GPS, des capteurs 32 de détermination de la pente de l'aéronef, notamment au moins une centrale inertielle, et un capteur 33 de détermination d'une hauteur par rapport au sol, notamment un radio-altimètre.

Les capteurs du système 30 sont propres à fournir une information sur la position géographique de l'aéronef 12, sur sa vitesse, son cap et son attitude (assiette longitudinale, angle de roulis).

En référence à la figure 1, le système d'affichage 10 selon l'invention est raccordé au système de capteurs de mesure 30.

Le système d'affichage 10 comporte au moins un afficheur 36, et un ensemble 38 de génération d'affichage sur l'afficheur 36, raccordé à l'afficheur 36 et au système de capteurs de mesure 30. Le système 10 comporte en outre une interface homme/machine 40.

L'afficheur 36 est par exemple un des écrans 24A à 24B ou/et est l'écran semi-transparent tête haute 26 du cockpit 14. Dans d'autres variantes, l'afficheur 36 est par exemple un système de projection d'images sur le pare-brise du cockpit, un pare-soleil semi-transparent, un viseur de casque ou une lunette semi-transparente proche de l'oeil.

Dans un premier mode de réalisation, qui sera décrit par la suite, l'afficheur 36 du système d'affichage 10 selon l'invention est l'écran semi-transparent tête haute 26 du cockpit 14.

L'ensemble de génération d'affichage 38 comporte au moins un processeur 42 et au moins une mémoire 44 contenant une pluralité de modules logiciels propres à être exécutés par le processeur 42. Il comporte une base de données 46 de caractéristiques de pistes d'atterrissage, par exemple stockée dans la mémoire 44.

L'ensemble de génération d'affichage 38 comporte un module 48 de récupération des données des capteurs de mesure du système 30, en particulier du capteur 32 de mesure de la pente de l'aéronef 12, et du capteur 33 de mesure de hauteur de l'aéronef 12 par rapport au sol.

L'ensemble de génération d'affichage 38 comporte en outre un module 47 de génération d'un symbole 49 de maquette de l'aéronef, un module 50 de génération d'une ligne 52 d'horizon artificiel, et un module 54 associé de génération d'une échelle de pente 56.

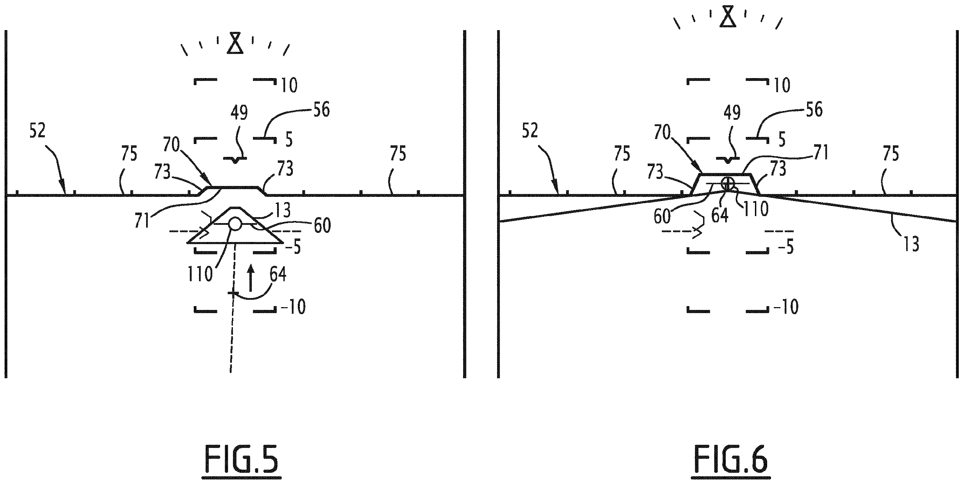

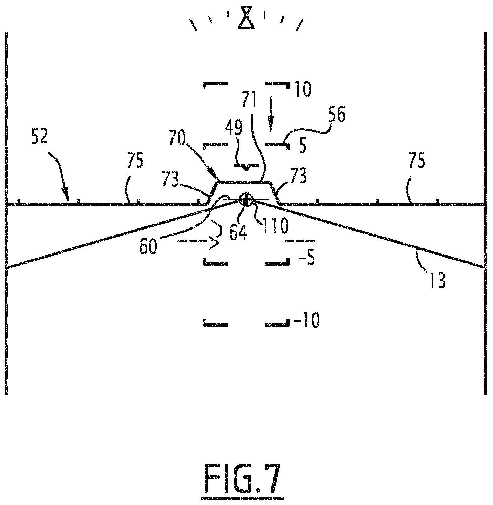

L'ensemble de génération d'affichage 38 comprend également un module 58 de génération d'un symbole 60 de vecteur vitesse, et un module 62 de génération d'un symbole 64 de guidage d'arrondi, visible sur les figures 5 à 7.

L'ensemble de génération d'affichage 38 comporte en outre des modules (non représentés) de génération d'autres symboles représentatifs de paramètres de vol, par exemple un indicateur d'altitude, un indicateur de badin, de vitesse verticale, de vitesse sol, d'information moteur, et de conformation de sustentation de l'aéronef.

Le module de génération 47 est propre à engendrer l'affichage d'un symbole 49 de maquette avion qui matérialise une projection à l'infini de l'axe longitudinal de l'aéronef 12, à partir des données reçues des capteurs du système de capteurs de mesure 30.

Le module de génération 50 est propre à déterminer, à partir des données reçues des capteurs du système de capteurs de mesure 30, la position d'une ligne d'horizon artificiel 52 par rapport à l'attitude courante de l'aéronef. Cette ligne d'horizon 52 est droite lorsque l'aéronef 12 évolue ailes à plat, et s'incline en fonction de l'angle de gîte de l'aéronef 12.

Dans au moins une phase d'approche de l'aéronef 12 vers la piste d'atterrissage 13, le module 50 est propre à engendrer, sur la ligne d'horizon 52, une région déformée 70 en fonction de la pente topographique de la piste d'atterrissage 13.

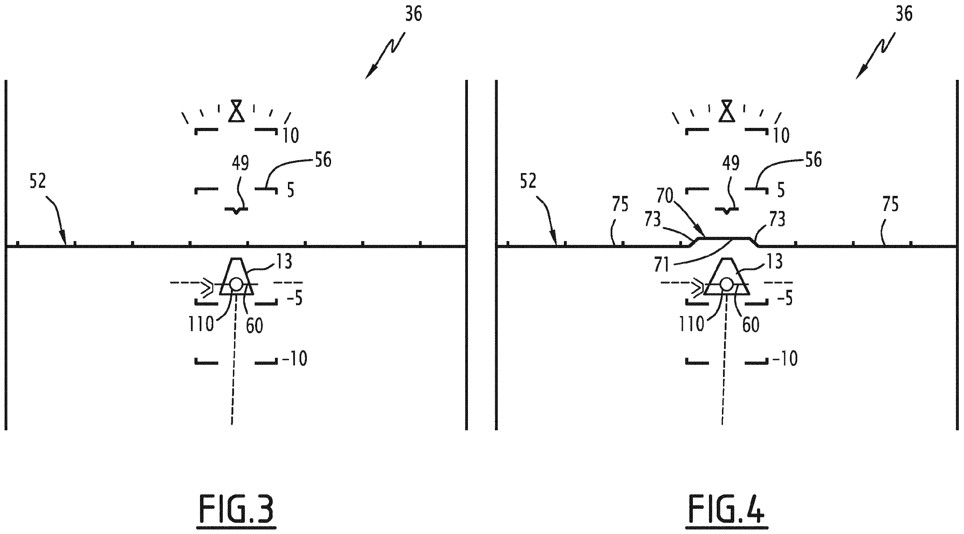

Dans l'exemple représenté sur la figure 4, la région déformée 70 est une région de la ligne d'horizon 52 centrée sur le symbole de vecteur de vitesse 60. Elle présente une forme de créneau avec un segment 71 parallèle au reste 75 de la ligne d'horizon 52, et deux segments de liaison 73 inclinés ou perpendiculaires par rapport au reste 75 de la ligne d'horizon 52.

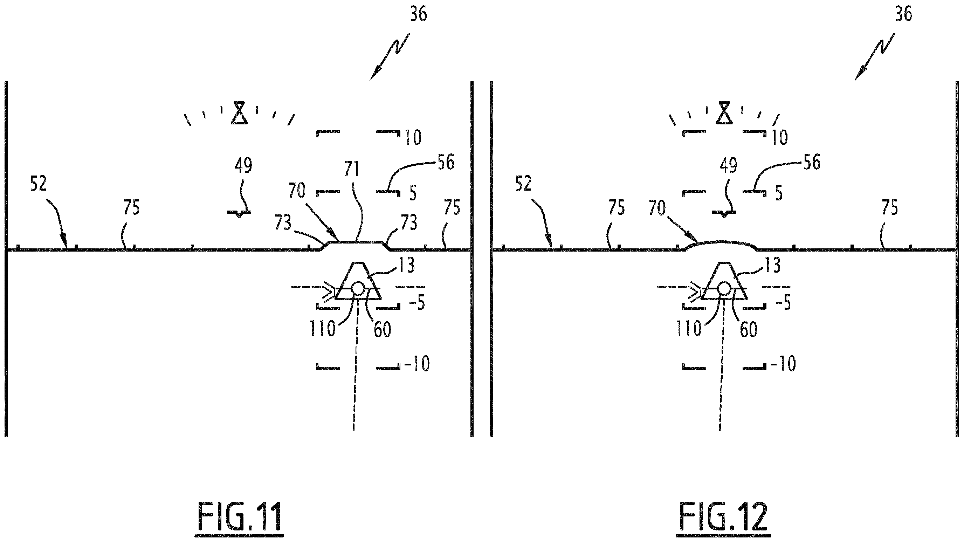

En variante illustrée par la figure 11, la région déformée 70 présente une forme incurvée, par exemple une forme de bosse. La forme incurvée présente un sommet à une hauteur, prise par rapport au reste 75 de la ligne d'horizon 52, fonction de la pente topographique de la piste d'atterrissage 13.

La région déformée 70 s'étend vers le haut lorsque la pente topographique de la piste d'atterrissage 13 est positive. Elle s'étend vers le bas lorsque la pente topographique de la piste d'atterrissage 13 est négative.

En référence à la figure 1, le module de génération 50 comporte une application logicielle de calcul 72 propre à calculer une déformation locale de la ligne d'horizon 52 dans la région déformée 70, en fonction de la pente topographique de la piste d'atterrissage 13.

Par « pente topographique », on entend la pente réelle de la piste d'atterrissage 13 sur le terrain.

La déformation de la région déformée 70 est ici caractérisée par sa hauteur maximale, prise verticalement par rapport au reste de la ligne d'horizon 52.

L'application de calcul 72 est propre à récupérer au moins une information topographique caractéristique de la piste 13, issue d'une base de données ou mesurée, et à calculer la déformation de la région déformée 70 en fonction de la ou des informations topographiques caractéristiques.

Avantageusement, dans une première phase d'évolution de l'aéronef 12 à distance axialement de la piste d'atterrissage 13, l'application logicielle de calcul 72 est propre à récupérer au moins une information topographique dans la base de données de pistes d'atterrissage 46, puis à calculer la déformation locale de la ligne d'horizon 52 dans la région déformée 70 en fonction de la ou de chaque information topographique issue d'une base de données.

L'information topographique issue d'une base de données est par exemple l'altitude à un point donné de la piste et/ou la longueur de la piste. La base de données 46 comporte par exemple pour chaque piste d'atterrissage 13, l'altitude du seuil de piste, l'altitude de la fin de piste et la longueur de la piste.

L'application logicielle de calcul 72 est alors propre à calculer une pente estimée de la piste 13 sur la base de l'altitude du seuil de piste, de l'altitude de la fin de piste et de la longueur de la piste.

Dans une variante, l'information topographique issue d'une base de données contenue dans la base de données 46 est directement la pente topographique dans la zone de toucher autour du point cible de toucher.

Dans une deuxième phase d'évolution de l'aéronef 12 au-dessus de la piste d'atterrissage 13, l'application logicielle de calcul 72 est propre à calculer en continu une information topographique caractéristique mesurée de la piste 13, en fonction des données des capteurs 31, 33 de mesure de la pente avion et de la hauteur de l'aéronef par rapport au sol récupérées par le module de récupération de données 48.

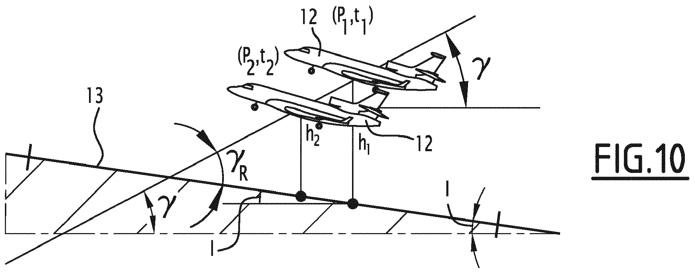

En référence à la figure 10, cette information topographique est une pente calculée l et est déterminée notamment à partir des mesures collectées en deux points successifs P1, P2 de la trajectoire de l'aéronef 12 au temps de passage successifs t1, t2, et notamment des hauteurs h1, h2 mesurées aux points P1, P2, de la pente avion mesurée entre les points P1 et P2, et de la vitesse horizontale VH de l'aéronef 12.

La pente topographique locale l de la piste est par exemple estimée par les équations suivantes :

$$\Delta = \arctan\left[\,(h2 - h1) \,/\, (VH \times (t2-t1))\,\right] \qquad (1)$$

$$l = \gamma - \Delta \qquad (2).$$

La hauteur maximale de la région déformée 70 est alors calculée par l'application de calcul 72 pour correspondre à la valeur de la pente topographique issue d'une base de données ou mesurée de la piste d'atterrissage 13, prise sur l'échelle de pente 56 engendrée par le module 54.

Par exemple, si la pente topographique issue d'une base de données ou mesurée est de N degrés, la hauteur maximale de la région déformée 70 par rapport au reste 75 de la ligne d'horizon 52 est de N degrés sur l'échelle de pente 56 engendrée par le module 54.

Dans la première phase d'évolution de l'aéronef 12 à l'écart de la piste d'atterrissage 13, la hauteur de la région déformée 70 reste constante. Dans une deuxième phase d'évolution de l'aéronef 12, au-dessus de la piste d'atterrissage 13, la hauteur de la région déformée 70 évolue en continu en fonction de la pente topographique locale de la piste 13 au-dessous de l'aéronef 12 mesurée à l'aide des capteurs du système 30.

Dans cet exemple, la région déformée 70 engendrée par le module 50 est centrée par rapport à l'échelle de pente 56, et par rapport au symbole de vecteur vitesse 60.

La région déformée 70 présente ici une largeur supérieure à celle du symbole de vecteur vitesse 60, et de préférence, à celle de l'extrémité de la piste d'atterrissage 13.

La largeur de la région déformée 70 reste cependant de préférence inférieure à 80 %, avantageusement inférieure à 50% de la largeur totale de la ligne d'horizon 52.

La largeur de la région déformée 70 est par exemple supérieure à celle du symbole de vecteur vitesse 60, et inférieure à deux fois la largeur du symbole de vecteur vitesse 60.

La largeur de la piste d'atterrissage 13 est obtenue à partir de la base de données 46.

La région déformée 70 est donc localisée. Elle suit l'évolution latérale du symbole de vecteur vitesse 60 comme illustré par la figure 11, lors d'une évolution vent de travers.

Le module de génération 54 est propre à engendrer une échelle de pente 56 centrée horizontalement sur le reste 75 de la ligne d'horizon 52, à l'écart de la région déformée 70. L'échelle de pente 56 est par exemple graduée en degrés de pente par rapport à la ligne d'horizon artificiel 52, prise à l'écart de la région déformée 70.

Le module de génération 58 est propre à engendrer l'affichage d'un symbole de vecteur vitesse 60 indiquant la direction du vecteur vitesse de l'aéronef 12, sur la base des données reçues des capteurs du système 30. L'écart vertical entre la ligne d'horizon artificiel 52, à l'écart de la région déformée 70, représente la pente sol $\gamma$ de l'aéronef, telle qu'illustrée sur la figure 8, prise par rapport à un sol non incliné.

L'écart vertical entre la région déformée 70 et le symbole de vecteur vitesse 60 représente alors la pente sol $\gamma_R$ apparente de l'aéronef 12 par rapport à la piste d'atterrissage 13, tenant compte de la pente topographique I de la piste d'atterrissage 13 (voir figure 8 ou 9).

Le module de génération 62 est propre à engendrer l'affichage du symbole de guidage d'arrondi 64, en fin d'approche vers la piste d'atterrissage 13.

Il est propre à afficher le symbole de guidage d'arrondi 64 pour avertir l'équipage de l'atteinte d'une position de début de manoeuvre d'arrondi, de préférence d'une hauteur de début de manoeuvre d'arrondi. La position de début de manoeuvre d'arrondi est déterminée en tenant compte de la pente topographique I de la piste d'atterrissage 13.

La position de début de manoeuvre d'arrondi est déterminée par le module de génération 62 en fonction d'une information de pente topographique issue d'une base de données de la piste d'atterrissage 13, déterminée à l'aide de la base de données de pistes d'atterrissage 46, à l'aide d'une application de calcul 72 comme décrit plus haut, soit en utilisant les altitudes de seuil et de fin de piste et la longueur de piste contenues dans la base de données 46, soit en utilisant directement une pente contenue dans la base de données 46.

La position de début de manoeuvre d'arrondi est déterminée en tenant également compte de la pente avion mesurée $\gamma$.

Avantageusement, le module de génération 62 comporte une base de données de hauteurs de début de manoeuvre d'arrondi, en fonction de la pente avion $\gamma$ mesurée par le capteur 32 et de la pente topographique I de la piste d'atterrissage 13, telle que déterminée par l'application de calcul 72, notamment en fonction de la pente apparente $\gamma_R$ calculée à partir de la pente avion $\gamma$ et de la pente topographique I.

Le module de génération 62 est propre à signaler l'atteinte de la hauteur de début de manoeuvre d'arrondi en plaçant le symbole de guidage d'arrondi 64 en regard du symbole de vecteur vitesse 60. De préférence, pour signaler que l'aéronef 12 a atteint la hauteur de début d'arrondi, le symbole de guidage d'arrondi 64 est disposé au même niveau horizontal que le symbole de vecteur vitesse 60, en coïncidence horizontale avec celui-ci, de préférence dans une zone de réception 110 du symbole de vecteur vitesse 60 matérialisée ici par un cercle définissant la pente souhaitée de l'aéronef.

Pour permettre au pilote d'anticiper l'atteinte de la position de début de manoeuvre d'arrondi, le module de génération 62 est avantageusement propre à afficher le symbole de guidage d'arrondi 64 sous le symbole de vecteur vitesse 60 avant l'atteinte de la position de début de manoeuvre d'arrondi et à le rapprocher verticalement du symbole de vecteur vitesse 60 pour atteindre le symbole de vecteur vitesse 60 à la position de début de manoeuvre d'arrondi.

Une fois la position de début de manoeuvre d'arrondi atteinte, le module de génération 62 est propre à rapprocher le symbole de guidage d'arrondi 64 de la ligne d'horizon 52 suivant une loi de commande représentative d'un profil d'augmentation de la vitesse verticale durant l'arrondi.

La loi de commande relie par exemple, pour chaque pente apparente $\gamma_R$ de l'aéronef 12 par rapport à la piste d'atterrissage 13, une hauteur par rapport à la piste d'atterrissage 13 à une vitesse verticale cible. La loi de commande permet de passer d'une première vitesse verticale de début d'arrondi, lorsque l'aéronef 12 atteint la hauteur de début de manoeuvre d'arrondi, à une deuxième vitesse verticale cible de fin d'arrondi supérieure à la première vitesse verticale lorsque l'aéronef atteint la fin d'arrondi avant le toucher des roues. Elle tient compte de la pente topographique de la piste d'atterrissage 13.

De préférence, la deuxième vitesse verticale cible de fin d'arrondi, qui s'applique à la fin d'arrondi est calculée en fonction de la pente topographique de la piste d'atterrissage 13.

Le module de génération 62 est propre à déterminer à chaque instant la deuxième vitesse verticale cible en fonction de la pente topographique de la piste d'atterrissage 13. La pente topographique, est initialement estimée à l'aide des informations topographiques issue d'une base de données tel que décrit plus haut, puis est obtenue par calcul à l'aide des données de hauteur et des données de pente mesurées respectivement à l'aide des capteurs 33 et 32, comme indiqué plus haut.

Suivant la loi de commande, le symbole de guidage d'arrondi 64 est déplacé par rapport à la ligne d'horizon 52, en traduisant sous forme d'une pente sur l'échelle de pente avion 56 la vitesse verticale cible, obtenue à la hauteur mesurée à chaque instant, par le capteur 33.

Puis, une fois la fin d'arrondi atteinte, le module de génération 62 est propre à maintenir le symbole de guidage d'arrondi 64 à une distance constante de la ligne d'horizon 52, correspondant à la valeur de vitesse verticale cible souhaitée en fin d'arrondi, permettant un toucher adéquat de l'aéronef 12 sur la piste d'atterrissage 13.

Le fonctionnement du système d'affichage 10 selon l'invention, lors de l'approche vers une piste d'atterrissage 13 va maintenant être décrit, en référence aux figures 3 à 7.

Initialement, l'aéronef 12 descend vers la piste d'atterrissage 13. Comme illustré par la figure 3, le module de génération 50 maintient la ligne d'horizon 52 dans une configuration non déformée, dépourvue de région déformée 70.

Le module de génération 54 engendre l'affichage d'une échelle de pente 56 et le module de génération 58 engendre l'affichage d'un symbole de vecteur vitesse 60 dont la distance verticale à la ligne d'horizon 52 traduit la pente avion, sur l'échelle de pente 56.

Puis, à une distance donnée de la piste d'atterrissage 13, l'équipage sélectionne la piste d'atterrissage 13 visée. L'application de calcul 72 récupère des informations topographiques dans la base de données de piste 46.

Les informations topographiques issues d'une base de données récupérées sont par exemple l'altitude au seuil de piste, l'altitude en fin de piste et la longueur de la piste.

Sur la base des informations topographiques récupérées dans la base de données 46, l'application logicielle de calcul 72 calcule une pente topographique issue d'une base de données de la piste d'atterrissage 13.

En fonction de la pente topographique issue d'une base de données, l'application de calcul 72 détermine une hauteur maximale de la région déformée 70 par rapport au reste 75 de la ligne d'horizon 52 et affiche la région déformée 70 comme illustré sur la figure 4.

Dans cette première phase d'évolution, la hauteur de la région déformée 70 par rapport au reste de la ligne d'horizon 52 est constante.

La hauteur de la région déformée 70 est représentative de la pente topographique issue d'une base de données de la piste d'atterrissage 13. La région déformée 70 s'étend vers le haut dans le cas où la pente topographique est positive et vers le bas, dans le cas où la pente topographique est négative.

La largeur de la région déformée 70 est légèrement supérieure à celle du symbole de vecteur vitesse 60 comme indiqué plus haut. La région déformée 70 reste centrée sur le symbole de vecteur vitesse 60.

Lorsque l'aéronef 12 atteint la piste d'atterrissage 13, ou à partir d'une altitude donnée au-dessus de la piste d'atterrissage 13, le capteur 33 mesure à chaque instant la hauteur de l'aéronef 12 par rapport à la piste d'atterrissage 13. La pente avion est par ailleurs mesurée en continu par le capteur 32.

Sur la base de cette hauteur mesurée et de la pente avion, la pente topographique locale I de la piste visible sur la figure 8 est alors estimée par l'application logicielle de calcul 72 en utilisant les équations (1) et (2) ci-dessus.

La hauteur maximale de la région déformée 70 est alors calculée à chaque instant par le module de calcul 72 pour correspondre à la valeur de la pente topographique mesurée de la piste d'atterrissage sur l'échelle de pente 56 engendrée par le module de génération 54.

Ainsi, en visualisant la région déformée, le pilote anticipe simplement que la piste d'atterrissage 13 n'est pas horizontale et adapte son arrondi en fonction de la pente topographique réelle de la piste d'atterrissage 13, dont la valeur est issue de tables dans la première phase d'évolution, et dont la valeur est mesurée dans la deuxième phase d'évolution.

Dans le cas d'une pente topographique positive de la piste d'atterrissage 13, ceci évite au pilote de ne pas suffisamment augmenter la vitesse verticale, ce qui serait susceptible de conduire à un atterrissage dur.

Au contraire, le pilote peut se caler à une distance donnée de la région déformée 70 de la ligne d'horizon 52 qui correspond à la pente apparente $\gamma_R$ de l'aéronef 12 par rapport à la piste d'atterrissage 13.

Dans le cas d'une pente topographique négative de la piste d'atterrissage 13, ceci évite au pilote de trop augmenter la vitesse verticale, ce qui engendrerait un atterrissage long et un risque de sortie de piste. La sécurité de l'atterrissage est donc augmentée.

L'affichage d'une région déformée 70 sur la ligne d'horizon artificiel 52 ne modifie pas les repères visuels du pilote, à l'opposé d'un décalage de toute la ligne d'horizon artificiel 52 en fonction de la pente de la piste.

Le pilote, pour réaliser l'arrondi, guide son vecteur vitesse relativement à la région déformée 70 comme il le fait pour une ligne d'horizon non déformée sur une piste plate. En particulier, le pilote place avantageusement le symbole de vecteur vitesse 60 sous la région déformée 70 et remonte progressivement le symbole de vecteur vitesse 60 par rapport à la région déformée 70 afin de placer le symbole 60 à une distance déterminée de la région déformée correspondant à une pente cible en fin d'arrondi (par exemple de l'ordre de 1° sous la région déformée 70 de la ligne d'horion).

Le pilote peut donc anticiper la manoeuvre comme sur une piste plate, sans perte de repères, qu'il pilote directement ou qu'il surveille les actions d'un système de pilotage automatique

Par ailleurs, comme illustré par la figure 5, pour permettre au pilote d'anticiper l'atteinte de la position de début de manoeuvre d'arrondi, le module de génération 62 est avantageusement propre à afficher le symbole de guidage d'arrondi 64, ici en forme de croix, sous le symbole de vecteur vitesse 60 avant la position de début de manoeuvre d'arrondi et à le rapprocher verticalement du symbole de vecteur vitesse 60 jusqu'à la position de début de manoeuvre d'arrondi.

La position de début d'arrondi est alors déterminée par le module de génération 62 en fonction d'une information de pente topographique issue d'une base de données de la piste d'atterrissage 13, déterminée à l'aide de la base de données de pistes d'atterrissage 46, par l'application de calcul 72 comme décrit plus haut.

La position de début de manoeuvre d'arrondi est en outre déterminée en tenant compte de la pente avion γ mesurée par le capteur 32.

En référence à la figure 6, le module de génération 62 signale ensuite l'atteinte de la position de début de manoeuvre d'arrondi en plaçant le symbole de guidage d'arrondi 64 en regard du symbole de vecteur vitesse 60.

A la hauteur de début de manoeuvre d'arrondi, le symbole de guidage d'arrondi 64 est disposé au même niveau horizontal que le symbole de vecteur vitesse 60, en coïncidence horizontale avec le symbole de vecteur vitesse 64, de préférence dans la zone de réception 110 du symbole de vecteur vitesse matérialisée ici par un cercle définissant la pente souhaitée de l'aéronef.

Ensuite, le module de génération 62 commande le rapprochement du symbole de guidage d'arrondi 64 vers la ligne d'horizon 52.

Le rapprochement suit la loi de commande prédéterminée, correspondant à une variation de vitesse verticale en fonction de la hauteur mesurée par rapport à la piste d'atterrissage 13, pour passer d'une première vitesse verticale cible à la position de début de manoeuvre d'arrondi à une deuxième vitesse verticale cible supérieure à la première vitesse verticale cible en fin d'arrondi.

Le module de génération 62 détermine à chaque instant la deuxième vitesse verticale cible en fonction de la pente topographique de la piste d'atterrissage 13. La pente topographique est initialement estimée à l'aide des informations topographiques issues d'une base de données, puis est mesurée à partir des données reçues des capteurs 32 et 33, comme indiqué plus haut.

À chaque instant, le module de génération 64 reçoit une donnée de hauteur mesurée à l'aide du capteur 33, et détermine la distance verticale séparant le symbole de guidage d'arrondi 64 de la ligne d'horizon 52 sur la base de la loi de commande.

Le symbole de guidage d'arrondi 64 se rapproche donc progressivement de la ligne d'horizon 52, indiquant clairement au pilote que l'arrondi doit être mis en oeuvre, et proposant au pilote une stratégie d'arrondi sur laquelle il doit caler le symbole de vecteur vitesse 60.

Le pilote ou le système de pilotage automatique 29 peut alors suivre la stratégie d'arrondi proposée en alignant horizontalement le symbole de vecteur vitesse 60 avec le symbole de guidage d'arrondi 64.

Une fois la fin d'arrondi atteinte, le module de génération 62 maintient le symbole de guidage d'arrondi 64 à une deuxième distance constante de la ligne d'horizon 52.

La présence du symbole de guidage d'arrondi 64 aide le pilote à déterminer le moment approprié pour initier l'arrondi, ce qui simplifie sa tâche en fin d'atterrissage.

Ce moment est non seulement déterminé en fonction de la pente avion mesurée, mais également en fonction d'une pente topographique de la piste d'atterrissage 13, pour tenir compte de la pente apparente entre l'aéronef 12 et la piste d'atterrissage 13.

Le déplacement vertical de ce symbole 64 est par ailleurs utile pour déterminer un profil souhaité de vitesse verticale durant l'arrondi.

Dans une variante, le symbole de guidage d'arrondi 64 est affiché uniquement lorsque les données provenant des capteurs du système 30 sont utilisées pour déterminer la pente mesurée de la piste 13.

Le symbole de guidage d'arrondi 64 est alors déplacé à chaque instant en fonction de la loi de commande, comme décrit plus haut.

Dans l'invention qui vient d'être décrite, la pente topographique de la piste d'atterrissage étant prise en compte dès le début de l'arrondi, ceci permet de mettre en oeuvre une manoeuvre d'arrondi avec une continuité dynamique et évite une augmentation brutale de la commande à cabrer dans le cas d'une pente positive.

Dans une variante, la base de données 46 contient un profil de pente topographique le long de la piste d'atterrissage 13, définissant pour chaque point de la piste, une information topographique de pente issue d'une base de données.

Le module de génération 50 est propre à calculer la hauteur de la région déformée en fonction de l'information topographique de pente issue d'une base de données correspondant à chaque point de la piste d'atterrissage 13, lorsque l'aéronef 12 se déplace au-dessus de la piste d'atterrissage 13. Dans une variante, le module de génération 50 est propre à maintenir la ligne d'horizon 52 sans région déformée 70 tant que des informations mesurées de pente topographique ne sont pas obtenues de manière fiable à partir du système de capteurs de mesure 30.

Dans une autre variante, l'ensemble de génération d'affichage 38 est propre à engendrer une région déformée 70 sur la ligne d'horizon 52, sans nécessairement engendrer l'affichage d'un symbole de guidage d'arrondi 64.

**Revendications**

1. Système (10) d'affichage d'un aéronef (12), comprenant :

   - un afficheur (36) ;
   - un ensemble de génération d'affichage (38) sur l'afficheur (36), propre à afficher dynamiquement sur l'afficheur (36) au moins une ligne d'horizon (52) et une échelle de pente (56) par rapport à la ligne d'horizon (52) ;

   **caractérisé en ce qu'**en approche d'une piste d'atterrissage (13), l'ensemble de génération d'affichage (38) est propre à engendrer sur la ligne d'horizon (52) une région (70) déformée en fonction de la pente topographique de la piste d'atterrissage (13) approchée par l'aéronef (12).

2. Système (10) selon la revendication 1, dans lequel l'ensemble de génération d'affichage (38) comporte une application de calcul (72) d'une déformation locale de la ligne d'horizon (52) dans la région déformée (70), en fonction d'une pente topographique déterminée à partir d'au moins une information topographique caractéristique de la piste d'atterrissage (13), l'information topographique étant issue d'une base de données ou mesurée.

3. Système (10) selon la revendication 2, dans lequel, dans une première phase d'évolution de l'aéronef (12) à distance de la piste d'atterrissage (13), l'ensemble de génération d'affichage (38) est propre à calculer la déformation locale de la ligne d'horizon (52) dans la région déformée (70) en fonction d'une pente topographique déterminée à partir d'au moins une information topographique issue d'une base de données, et dans lequel, dans une deuxième phase d'évolution de l'aéronef (12) au-dessus de la piste d'atterrissage (13), l'ensemble de génération d'affichage (38) est propre à calculer la déformation locale de la ligne d'horizon (52) dans la région déformée (70) en fonction d'une pente topographique déterminée à partir d'une information topographique mesurée.

4. Système (10) selon la revendication 2 ou 3, dans lequel l'application de calcul (72) est propre à interroger une base de données (46) de pistes d'atterrissage (13), la base de données (46) comprenant au moins une information topographique correspondant à chaque piste d'atterrissage (13).

5. Système (10) selon la revendication 4, dans lequel la base de données (46) comporte, pour chaque piste d'atterrissage (13), une première information topographique d'altitude de seuil de piste, une deuxième information topographique d'altitude de fin de piste, et une troisième information topographique de longueur de piste, la pente topographique étant calculée en fonction de la première information topographique, de la deuxième information topographique, et de la troisième information topographique, ou dans lequel la base de données (46) comporte un profil de pente topographique le long de la piste d'atterrissage (13), la pente topographique étant déterminée le long de la piste d'atterrissage (13) à partir du profil de pente topographique.

6. Système (10) selon l'une quelconque des revendications 2 à 5, dans lequel l'application de calcul (72) est propre à récupérer des données d'un capteur (32) de mesure de la pente avion et d'un capteur de mesure (33) d'une hauteur de l'aéronef (12) par rapport au sol, et à calculer une pente topographique, sur la base des données reçues du capteur de mesure de la pente avion (32) et du capteur de mesure de la hauteur de l'aéronef (12) par rapport au sol (33).

7. Système (10) selon l'une quelconque des revendications précédentes, dans lequel l'ensemble de génération d'affichage (38) est propre à afficher sur l'afficheur (36) un symbole de vecteur vitesse (60), indicatif de la pente de l'aéronef (12) sur l'échelle de pente (56), la largeur de la région déformée (70) sur la ligne d'horizon (52) propre à être affichée par l'ensemble de génération d'affichage (38) étant supérieure à la largeur du symbole de vecteur vitesse (70).

8. Système (10) selon la revendication 7, dans lequel la région déformée (70) sur la ligne d'horizon (52), propre à être affichée par l'ensemble de génération d'affichage (38) est centrée horizontalement sur le symbole de vecteur vitesse (60).

9. Système (10) selon l'une quelconque des revendications précédentes, dans lequel la région déformée (70) sur la ligne d'horizon (52) propre à être affichée par l'ensemble de génération d'affichage (38) présente une forme de créneau, ayant une hauteur, prise par rapport à la ligne d'horizon (52), fonction de la pente topographique de la piste d'atterrissage (13).

**10.** Système (10) selon l'une quelconque des revendications 1 à 8, dans lequel la région déformée (70) sur la ligne d'horizon (52) propre à être affichée par l'ensemble de génération d'affichage (38) présente une forme incurvée, notamment une forme de bosse, la forme incurvée présentant un sommet à une hauteur, prise par rapport à la ligne d'horizon (52), fonction de la pente topographique de la piste d'atterrissage (13).

**11.** Système (10) selon l'une quelconque des revendications précédentes, dans lequel l'ensemble de génération d'affichage (38) est propre à afficher un symbole de guidage d'arrondi (64) en regard de la région déformée (70).

**12.** Système (10) selon l'une quelconque des revendications précédentes, dans lequel, lorsque la pente topographique de la piste d'atterrissage (13) est non nulle et positive, la région déformée (70) de la ligne d'horizon (52) engendrée par l'ensemble de génération d'affichage (38) s'étend vers le haut, et dans lequel lorsque la pente topographique de la piste d'atterrissage (13) est non nulle et négative, la région déformée (70) de la ligne d'horizon (52) engendrée par l'ensemble de génération d'affichage (38) s'étend vers le bas.

**13.** Système (10) selon l'une quelconque des revendications précédentes, dans lequel l'afficheur (36) est un afficheur au moins partiellement transparent, tel qu'un écran semi-transparent placé devant un pare-brise du cockpit, un système de projection d'images sur le pare-brise du cockpit, un pare-soleil semi-transparent, un viseur de casque ou une lunette semi-transparente proche de l'oeil.

**14.** Procédé d'affichage dans un aéronef (12) comprenant les étapes suivantes :

- fourniture d'un système (10) selon l'une quelconque des revendications précédentes ;
- en approche d'une piste d'atterrissage (13), génération et affichage sur l'afficheur (36) par l'ensemble de génération d'affichage (38) d'une région déformée (70) de la ligne d'horizon (52) en fonction de la pente topographique de la piste d'atterrissage (13) approchée.

**15.** Procédé selon la revendication 14, dans lequel l'étape de génération comprend le calcul d'une déformation locale de la ligne d'horizon (52) dans la région déformée (70), en fonction d'au moins une information topographique caractéristique de la piste d'atterrissage (13) issue d'une base de données ou mesurée.

**Patentansprüche**

**1.** Anzeigesystem (10) eines Luftfahrzeugs (12), umfassend:

- eine Anzeigeeinheit (36);
- eine Einrichtung (38) zum Erzeugen einer Anzeige auf der Anzeigeeinheit (36), die geeignet ist, dynamisch mindestens eine Horizontlinie (52) und eine Steigungsskala (56) in Bezug auf die Horizontlinie (52) auf der Anzeigeeinheit (36) dynamisch anzuzeigen;

**dadurch gekennzeichnet, dass** bei Anflug einer Landebahn (13) die Einrichtung (38) zum Erzeugen einer Anzeige geeignet ist, auf der Horizontlinie (52) einen Bereich (70) zu erzeugen, der abhängig von der topografischen Neigung der Landebahn (13), die von dem Luftfahrzeug (12) angeflogen wird, zu deformieren.

**2.** System (10) nach Anspruch 1, bei dem die Einrichtung (38) zur Erzeugung einer Anzeige eine Applikation (72) zur Berechnung einer lokalen Verformung der Horizontlinie (52) in dem verformten Bereich (70) abhängig von einer topografischen Neigung aufweist, die aus mindestens einer topografischen Information bestimmt wird, die für die Landebahn (13) charakteristisch ist, wobei die topografische Information aus einer Datenbank stammt oder gemessen wird.

**3.** System (10) nach Anspruch 2, bei dem in einer ersten Phase des Abhebens des Luftfahrzeugs (12) mit Abstand zur Landebahn (13) die Einrichtung (38) zur Erzeugung einer Anzeige geeignet ist, die lokale Verformung der Horizontlinie (52) in dem verformten Bereich (70) abhängig von einer topografischen Neigung, die aus mindestens einer topografischen Information aus einer Datenbank stammt, zu berechnen und bei dem in einer zweiten Phase des Abhebens des Luftfahrzeugs (12) über der Landebahn (13) die Einrichtung (38) zur Erzeugung einer Anzeige geeignet ist, die lokale Verformung der Horizontlinie (52) in dem verformten Bereich (70) abhängig von einer topografischen Neigung zu berechnen, die aus einer gemessenen topografischen Information bestimmt wird.

4. System (10) nach Anspruch 2 oder 3, bei dem die Berechnungsapplikation (72) geeignet ist, eine Datenbank (46) von Landebahnen (13) abzufragen, wobei die Datenbank (46) mindestens eine topografische Information entsprechend jeder Landebahn (13) umfasst.

5. System (10) nach Anspruch 4, bei dem die Datenbank (46) für jede Landebahn (13) eine erste topografische Information einer Höhe der Schwelle der Bahn, eine zweite topografische Information der Höhe des Endes der Bahn und eine dritte topografische Information der Länge der Bahn aufweist, wobei die topografische Neigung abhängig von der ersten topografischen Information, der zweiten topografischen Information und der dritten topografischen Information berechnet wird, oder bei dem die Datenbank (46) ein topografisches Neigungsprofil entlang der Landebahn (13) aufweist, wobei die topografische Neigung entlang der Landebahn (13) aus dem topografischen Neigungsprofil bestimmt wird.

6. System (10) nach einem beliebigen der Ansprüche 2 bis 5, bei dem die Berechnungsapplikation (72) geeignet ist, die Daten eines Sensors (32) zum Messen der Luftfahrzeugneigung und eines Sensors (33) zum Messen einer Höhe des Luftfahrzeugs (12) in Bezug auf den Boden abzurufen und eine topografische Neigung auf der Grundlage der empfangenen Daten des Sensors (32) zum Messen der Luftfahrzeugneigung und des Sensors (33) zum Messen der Höhe des Luftfahrzeugs (12) in Bezug auf den Boden zu berechnen.

7. System (10) nach einem beliebigen der vorhergehenden Ansprüche, bei dem die Einrichtung (38) zum Erzeugen einer Anzeige geeignet ist, auf der Anzeigeeinheit (36) ein Symbol (60) eines Geschwindigkeitsvektors anzuzeigen, die Neigung des Luftfahrzeugs (12) auf der Skala (56) der Neigung angebend, wobei die Breite des verformten Bereichs (70) auf der Horizontlinie (52), die geeignet ist, von der Einrichtung (38) zum Erzeugen einer Anzeige angezeigt zu werden, größer ist als die Breite des Symbols (60) des Geschwindigkeitsvektors.

8. System (10) nach Anspruch 7, bei dem der verformte Bereich (70) auf der Horizontlinie (52), der geeignet ist, von der Einrichtung (38) zur Erzeugung einer Anzeige angezeigt zu werden, horizontal auf das Symbol (60) des Geschwindigkeitsvektors zentriert ist.

9. System (10) nach einem beliebigen der vorhergehenden Ansprüche, bei dem der auf der Horizontlinie (52) verformte Bereich (70), der geeignet ist, von der Einrichtung (38) zur Erzeugung einer Anzeige angezeigt zu werden, die Form eines Segments aufweist, das eine Höhe in Bezug auf die Horizontlinie (52) hat, die abhängig von der topografischen Neigung der Landebahn (13) ist.

10. System (10) nach einem beliebigen der Ansprüche 1 bis 8, bei dem der auf der Horizontlinie (52) verformte Bereich (70), der geeignet ist, von der Einrichtung (38) zur Erzeugung einer Anzeige angezeigt zu werden, eine gekrümmte Form, insbesondere eine Buckelform aufweist, wobei die gekrümmte Form einen Scheitelpunkt an einer Höhe in Bezug auf die Horizontlinie (52) aufweist, die abhängig von der topografischen Neigung der Landebahn (13) ist.

11. System (10) nach einem beliebigen der vorhergehenden Ansprüche, bei dem die Einrichtung (38) zur Erzeugung einer Anzeige geeignet ist, ein Abfangführungssymbol (64) gegenüberliegend zum verformten Bereich (70) anzuzeigen.

12. System (10) nach einem beliebigen der vorhergehenden Ansprüche, bei dem, wenn die topografische Neigung der Landebahn (13) nicht null und positiv ist, sich der deformierte Bereich (70) der Horizontlinie (52), der von der Einrichtung (38) zur Erzeugung einer Anzeige erzeugt wurde, in die Höhe erstreckt und bei dem, wenn die topografische Neigung der Landebahn (13) nicht null negativ ist, sich der verformte Bereich (70) der Horizontlinie (52), der von der Einrichtung (38) zur Erzeugung einer Anzeige erzeugt wird, nach unten erstreckt.

13. System (10) nach einem beliebigen der vorhergehenden Ansprüche, bei dem die Anzeigeeinheit (36) eine zumindest teilweise transparente Anzeigeeinheit ist, wie ein halbtransparenter Schirm, der vor der Frontscheibe des Cockpits angeordnet ist, ein System zum Projizieren von Bildern auf die Frontscheibe des Cockpits, eine halbtransparente Sonnenblende, ein Helmsichtgerät oder eine halbtransparente Brille nahe des Auges.

14. Verfahren zum Anzeigen in einem Luftfahrzeug (12), folgende Schritte umfassend:

- Bereitstellen eines Systems (10) nach einem beliebigen der vorhergehenden Ansprüche;
- beim Anflug einer Landebahn (13) Erzeugen eines verformten Bereichs (70) der Horizontlinie (52) abhängig von der topografischen Neigung der angeflogenen Landebahn (13) durch die Einrichtung (38) zur Erzeugung einer Anzeige und Anzeigen derselben auf der Anzeigeeinheit (36).

15. Verfahren nach Anspruch 14, bei dem der Schritt des Erzeugens die Berechnung einer lokalen Verformung der Horizontlinie (52) in dem verformten Bereich (70) abhängig von mindestens einer topografischen Information, die für die Landebahn (13) charakteristisch ist und aus einer Datenbank stammt oder gemessen wird, umfasst.

**Claims**

1. A display system (10) of an aircraft (12), comprising:

   - a display unit (36) ;
   - a display generating assembly (38) for generating a display on the display unit (36), able to dynamically display on the display unit (36) at least one horizon line (52) and a slope scale (56) of the slope relative to the horizon line (52) ;

   **characterized in that**, upon approaching a landing strip (13), the display generating assembly (38) is able to create, on the horizon line (52), a region (70) that is deformed as a function of the topographical slope of the landing strip (13) approached by the aircraft (12).

2. The system (10) according to claim 1, wherein the display generating assembly (38) includes an application for calculating (72) a local deformation of the horizon line (52) (52) in the deformed region (70), as a function of a topographical slope determined from at least one piece of topographical information characteristic of the landing strip (13), the topographical information coming from a database or being measured.

3. The system (10) according to claim 2, wherein, in a first movement phase of the aircraft (12) at a distance from the landing strip (13), the display generating assembly (38) is able to calculate the local deformation of the horizon line (52) in the deformed region (70) as a function of a topographical slope determined from at least one piece of topographical information from a database, and wherein, in a second movement phase of the aircraft (12) above the landing strip (13), the display generating assembly (38) is able to calculate the local deformation of the horizon line (52) in the deformed region (70) as a function of a topographical slope determined from a measured piece of topographical information.

4. The system (10) according to claim 2 or 3, wherein the calculating application (72) is able to query a database (46) of landing strips (13), the database (46) comprising at least one piece of topographical information corresponding to each landing strip (13).

5. The system (10) according to claim 4, wherein the database (46) includes, for each landing strip (13), a first piece of topographical information for the runway threshold altitude, a second piece of topographical information for the end-of-runway altitude, and a third piece of topographical information for the runway length, the topographical slope being calculated as a function of the first piece of topographical information, the second piece of topographical information, and the third piece of topographical information, or wherein the database (46) includes a topographical slope profile along the landing strip (13), the topographical slope being determined along the landing strip (13) from the topographical slope profile.

6. The system (10) according to any one of claims 2 to 5, wherein the calculating application (72) is able to recover data from a sensor (32) measuring the slope of the airplane and from a sensor (33) measuring a height of the aircraft (12) relative to the ground, and to calculate a topographical slope, based on data received from the sensor (32) measuring the airplane slope and from the sensor (33) measuring the height of the aircraft relative to the ground.

7. The system (10) according to any one of the preceding claims, wherein the display generating assembly (38) is able to display, on the display unit (36), a speed vector symbol (60), indicating the slope of the aircraft (12) on the slope scale (56), the width of the deformed region (70) on the horizon line (52) able to be displayed by the display generating assembly (38) being greater than the width of the speed vector symbol (70).

8. The system (10) according to claim 7, wherein the deformed region (70) on the horizon line (52), able to be displayed by the display generating assembly (38), is horizontally centered on the speed vector symbol (60).

9.  The system (10) according to any one of the preceding claims, wherein the deformed region (70) on the horizon line (52) able to be displayed by the display generating assembly (38) is in the form of an indentation, having a height, considered relative to the horizon line (52), depending on the topographical slope of the landing strip (13).

10. The system (10) according to any one of claims 1 to 8, wherein the deformed region (70) on the horizon line (52) able to be displayed by the display generating assembly (38) has a curved shape, in particular a bump shape, the curved shape having an apex at a height, considered relative to the horizon line (52), depending on the topographical slope of the landing strip (13).

11. The system (10) according to any one of the preceding claims, wherein the display generating assembly (38) is able to display a flare guidance symbol (64) across from the deformed region (70).

12. The system (10) according to any one of the preceding claims, wherein, when the topographical slope of the landing strip (13) is non-null and positive, the deformed region (70) of the horizon line (52) created by the display generating assembly (38) extends upward, and wherein when the topographical slope of the landing strip (13) is non-null and negative, the deformed region (70) of the horizon line (52) created by the display generating assembly (38) extends downward.

13. The system (10) according to any one of the preceding claims, wherein the display unit (36) is an at least partially transparent display unit, such as a semitransparent screen placed in front of a windshield of the cockpit, a system for projecting images on the windshield of the cockpit, a semitransparent sunshade, a helmet visor or a semitransparent glass close to the eye.

14. A display method in an aircraft (12) comprising:

    - providing a system (10) according to any one of the preceding claims;
    - upon approaching a landing strip (13), generating and displaying, on the display unit (36) via the display generating assembly (38), a deformed region (70) of the horizon line (52) as a function of the topographical slope of the approached landing strip (13).

15. The method according to claim 16, wherein the generating step comprises calculating a local deformation of the horizon line (52) in the deformed region (70), as a function of at least one piece of topographical information characteristic of the landing strip (13) from the database or that is measured.

FIG.1

FIG.2

EP 3 109 598 B1

$$\underline{FIG.3}$$

$$\underline{FIG.4}$$

FIG.5

FIG.6

FIG.7

**FIG.8**

**FIG.9**

FIG.10

FIG.11

FIG.12

EP 3 109 598 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **JAMES ALBRIGHT.** *Heads Up Display Symbology,* 01 Décembre 2013